# EUROPÄISCHE PATENTSCHRIFT

(11) **EP 1 288 560 B1**
(45) Veröffentlichungstag und Bekanntmachung des Hinweises auf die Patenterteilung: **06.10.2004**
(21) Anmeldenummer: 02450073.8
(22) Anmeldetag: 26.03.2002
(51) Int. Cl.: F17C 13/04, F16K 1/30, B67C 3/00

(54) **Einrichtung zur kontrollierten Entnahme von Gasen aus Druckflaschen oder Druckkartuschen**
Device for controlled discharge of gas from pressure vessels or cartridges
Appareillage de soutirage de gaz pour réservoirs ou cartouches sous pression

(30) Priorität: 04.09.2001 AT 6842001 U
(43) Veröffentlichungstag der Anmeldung: 05.03.2003
(73) Patentinhaber: Hermeling, Werner, 7100 Neusiedl am See (AT)
(72) Erfinder: Hermeling, Werner, 7100 Neusiedl am See (AT)
(74) Vertreter: Haffner, Thomas M.

(56) Entgegenhaltungen:
- AT-B- 293 345
- DE-A- 3 511 630
- FR-A- 1 313 173
- US-A- 3 273 610
- US-A- 3 903 914

## Beschreibung

Die Erfindung bezieht sich auf eine Einrichtung zur kontrollierten Entnahme von Gasen aus Druckflaschen oder Druckkartuschen mit den gewünschten Entnahmedruck übersteigendem Druck mit einem handbetätigten Ventil, beispielsweise zum Spülen des Gasraumes von teilentleerten Weinflaschen mit Inertgasen.

Druckflaschen oder Druckkartuschen stehen in der Regel unter einem hohen Druck von beispielsweise etwa 200 bar. Wenn aus derartigen Druckflaschen oder Druckkartuschen gasförmige Medien abgezogen werden, ist in der Regel eine Druckmindereinrichtung bzw. eine Drosselstelle vorgesehen um das Druckniveau abzusenken. Als Drosselstelle kann eine Bohrung, eine Düse oder Verengung einer Rohrleitung eingesetzt werden, wobei im Bereich der Drosselstelle ein erheblicher Geschwindigkeitsanstieg beobachtet wird. Insbesondere bei hohen Druckunterschieden ist es relativ schwierig eine derartige Druckmindereinrichtung so einzustellen, daß die kritische Geschwindigkeit unterschritten wird, was in der Folge Probleme bei der Einstellung des geforderten Volumenstromes mit sich bringt. Unterhalb der kritischen Geschwindigkeit kann der Volumenstrom in aller Regel nur unzureichend reguliert werden, wohingegen dann, wenn das Medium mit überkritischer Geschwindigkeit einströmt ein zu hohes Volumen transportiert wird.

Um zu verhindern, daß Wein in teilentleerten Weinflaschen durch den Sauerstoff der atmosphärischen Luft oxidiert und geschmacklich verändert wird, ist es bekannt, den Gasraum oberhalb des Flüssigkeitsspiegels einer derartigen teilentleerten Weinflasche durch eine einfache Kolbenpumpe teilweise zu evakuieren. Eine derartige Methode zur Verringerung der Gefahr einer Oxidation bringt allerdings den Nachteil mit sich, daß volatile Inhalts- und Geschmacksstoffe des Weines gleichfalls abgezogen werden, sodaß auch hier geschmackliche Veränderungen des Weines in einer teilentleerten Weinflasche nicht verhindert werden können.

FR-A- 1 313 173 offenbart eine Einrichtung zur kontrollierten Entnahme von Gasen aus Druckflaschen mit den Merkmalen des Oberbegriffs von Anspruch 1.

Die Erfindung zielt nun darauf ab, eine besonders einfache und betriebssichere und insbesondere gegen Fehlbedienung gesicherte Einrichtung der eingangs genannten Art zu schaffen, welche unmittelbar mit einer Druckflasche oder einer Druckkartusche verbunden werden kann, um bei besonders einfacher Bedienbarkeit die Möglichkeit zu bieten, Gas in der gewünschten Menge und auf dem gewünschten Druckniveau ohne Verwendung aufwendiger Druckminderventile bereitzustellen.

Zur Lösung dieser Aufgabe besteht die erfindungsgemäße Einrichtung der eingangs genannten Art im wesentlichen darin, daß das handbetätigte Ventil mit einem gegen die Kraft einer Feder verschiebbaren Stössel ausgebildet ist, wobei der Stössel eine in einem Zylinder, vorzugsweise dichtend, geführte Stösselplatte trägt und die Stösselplatte in Abstand von dem dem Betätigungsglied abgewandten Ende des Stössels am Stössel festgelegt ist, daß der Stössel und die Stösselplatte über einen definierten Weg zur Öffnung des Entnahmeventiles der Druckflasche bzw. der Druckkartusche verschiebbar sind und die Stösselplatte eine Querschnittsfläche aufweist, welche bei Beaufschlagung mit dem Druck der Druckflasche bzw. der Druckkartusche eine axiale Kraft auf den Stössel ausübt, welche größer ist als die durch Handbetätigung auf den Stössel ausübbare Kraft, daß die Stösselplatte wenigstens eine Drosselöffnung bzw. Durchbrechung aufweist und daß die Spülleitung auf der dem Entnahmeventil der Druckflasche oder Druckkartusche abgewandten Seite des Zylinders angeschlossen ist.

Hochdruckkartuschen bzw. Hochdruckflaschen haben üblicherweise ein Absperrventil, welches durch manuelle Kraft auf den Ventilkegel zumeist unter Zwischenschaltung eines Stössels händisch geöffnet wird, wobei das Ventil selbst in der Regel unter Federvorspannung gehalten und durch die Federkraft und den anliegenden Mediendruck wiederum geschlossen wird. Auf ein derartiges Absperrventil wird nun die erfindungsgemäße Einrichtung aufgesetzt, welche das handbetätigte Ventil aufweist, wobei der gegen die Kraft einer Feder verschiebbare Stössel über einen entsprechenden Betätigungsgriff oder einen einarmigen Hebel manuell oder durch die Kraft einer vorgespannten Feder automatisch betätigt werden kann. Dadurch, daß nun dieser Stössel eine in einem Zylinder vorzugsweise dichtend geführte Stösselplatte trägt und die Stösselplatte in einem Abstand von dem dem Betätigungsglied des Stössels abgewandten Ende des Stössels am Stössel festgelegt wird, wird die Möglichkeit geschaffen, den Stössel samt der Stösselplatte in einer Weise axial zu verlagern, welche das Absperrventil der Druckflasche bzw. der Druckkartusche öffnet. Bedingt durch die hohe Druckdifferenz strömt nun aus der Druckflasche oder der Druckkartusche Gas unter hohem Druck aus, wobei die erfindungsgemäße Ausbildung so getroffen ist, daß die Stösselplatte eine Querschnittsfläche aufweist, welche bei Beaufschlagung mit dem Druck der Druckflasche nach dem Öffnen des Absperrventiles eine entgegen der durch die Handbetätigung auf den Stössel ausgeübten Kraft wirkende Kraft ausübt, wobei diese Kraft größer sein soll als die maximale durch die Betätigung auf den Stössel ausübbare Kraft. Die entsprechende entgegen der durch die Betätigung ausgeübten Kraft wirksame Kraft führt somit zu einem Sperren des Absperrventiles der Druckflasche bzw. Druckkartusche, wobei der Raum zwischen dem Absperrventil und der Stösselplatte mit Gas unter Druck gefüllt wird. Aus diesem Pufferraum kann nun das unter hohem Druck stehende Gas über wenigstens eine Drosselöffnung bzw. Durchbrechung gedrosselt abfließen, bis der Druck in dem Speicherraum zwischen Stösselplatte und Absperrventil hinreichend abgesunken ist, sodaß die Reaktionskraft wiederum kleiner wird als die manuell oder einer vorgespannten Feder auf den Stössel ausübbare Kraft und ein neuerliches Öffnen des Absperrventiles durch axiale Verschiebung des Stössels ermöglicht wird.

In Strömungsrichtung nach der Drosselstelle der Stösselplatte wird nun die Entnahmeleitung angeschlossen, aus welcher beispielsweise Spülgas in der entsprechenden Menge und mit dem gewünschten Druckniveau zum Spülen des Gasraumes von Flaschen abgezogen werden kann, wobei sich insgesamt eine überaus kleinbauende und in hohem Maße betriebssichere Einrichtung ergibt, mit welcher durch einfaches Betätigen des Stössels jeweils nur diejenige Menge an Gasen im Pufferraum bereitgestellt werden kann, welche nach entsprechender Druckminderung durch die Drosselstelle zum Spülen wirksam werden soll und gleichzeitig bei zu hohen Druckdifferenzen ein sicheres Schließen der Druckflasche bzw. Druckkartusche selbsttätig wieder eintritt. Die erfindungsgemäße Einrichtung ist daher in hohem Maße gegen Bedienungsfehler gesichert und stellt sicher, daß tatsächlich in entsprechend geregelter Weise Medium mit dem entsprechenden Volumen und dem entsprechenden Druck zum Spülen bereitgestellt werden kann. Die erfindungsgemäße Einrichtung eignet sich daher für den Anschluss an beliebige Gasflaschen oder -kartuschen, so wie beispielsweise mit Schutzgas gefüllte Flaschen.

In besonders einfacher Weise ist die erfindungsgemäße ausbildung hiebei so getroffen, daß der Zylinder in einer auf die Druckflasche bzw. die Druckkartusche aufschraubbaren Schraubkappe angeordnet ist. Die überaus kleinbauende Entnahmeeinrichtung kann somit als einfache Schraubkappe mit dem entsprechenden Betätigungsglied für den Stössel ausgebildet sein und unmittelbar auf die Druckflasche bzw. Druckkartusche aufgeschraubt werden. Hiebei ist in besonders einfacher Weise die Ausbildung so getroffen, daß der Stössel und die Stösselplatte in dem als Schraubkappe ausgebildeten Bauteil geführt sind, wobei vorzugsweise an den Zylinderraum der Schraubkappe die Spülleitung und ein Sicherheitsventil angeschlossen sind. Die zusätzliche Anordnung eines Sicherheitsventiles macht Fehlbedienungen, welche mit Rücksicht auf die entsprechende Dimensionierung der Querschnittsfläche der Stösselplatte weitestgehend ausgeschlossen werden können, gänzlich unmöglich.

Um einen entsprechend großen Pufferraum zwischen Stösselplatte und dem Absperrventil der Hochdruckkartusche bzw. der Hochdruckflasche sicherzustellen, kann die Ausbildung mit Vorteil so getroffen sein, daß die Stösselplatte an der dem Betätigungsglied abgewandten Seite wenigstens eine zur Achse des Stössels konzentrische Ringnut aufweist.

Durch die erfindungsgemäße Ausbildung wird erreicht, daß dann, wenn das Entnahmeventil bzw. Absperrventil der Hochdruckkartusche durch unsachgemäßes rasches Betätigen des Stössels zu weit geöffnet wird, zunächst im Pufferraum ein hinreichend hoher Druck aufgebaut wird, wobei das Medium aufgrund der Drosselstelle in der Stösselplatte nicht rasch genug abfließen kann, wodurch sich eine Druckerhöhung im Pufferraum ergibt. Die zum Öffnen des Entnahmeventiles bzw. Absperrventiles der Druckflasche bzw. Druckkartusche erforderliche Kraft steigt auf diese Weise rasch an und kann manuell oder durch die voreingestellte Federkraft nicht mehr ohne weiteres aufgebracht werden, wodurch ein selbsttätiges Schließen des Absperrventiles der Druckflasche bzw. Druckkartusche erfolgt. Die Drosselstelle muß hiebei lediglich so bemessen sein, daß der Druckverlust über die Drosselstelle der Öffnung maximal gleich groß oder größer ist als der Druckverlust über die Medienleitung, über welche das Spülfluid bzw. Spülgas abgezogen wird. Auf diese Weise kann ein unerwünschter Druckanstieg in Strömungsrichtung nach der Stösselplatte ausgeschlossen werden.

Erfindungsgemäß kann aus konventionellen Hochdruckkartuschen das Produkt portioniert, beispielsweise in Portionen zu maximal 0,5 l bei Umgebungsdruck entnommen werden, wobei die Hochdruckkartusche ursprünglich mit 200 bar gefüllt sein kann. Nach Ausströmen einer derartig definierten Gasmenge kann nach erfolgtem Druckabbau im Pufferraum das Entnahmeventil bzw. Absperrventil der Druckflasche bzw. Druckkartusche erneut geöffnet werden, wodurch wiederum eine neue Portion an Spülgasen bereitgestellt wird. Bei entsprechender Dimensionierung und Abstimmung der einzelnen Bauteile läßt sich somit erreichen, daß mit einer einmaligen Betätigung der Einrichtung weitestgehend unabhängig vom Druck des Mediums in der Druckflasche bzw. Druckkartusche im wesentlichen gleiche Gasmengen bei atmosphärischem Druck bereitgestellt werden.

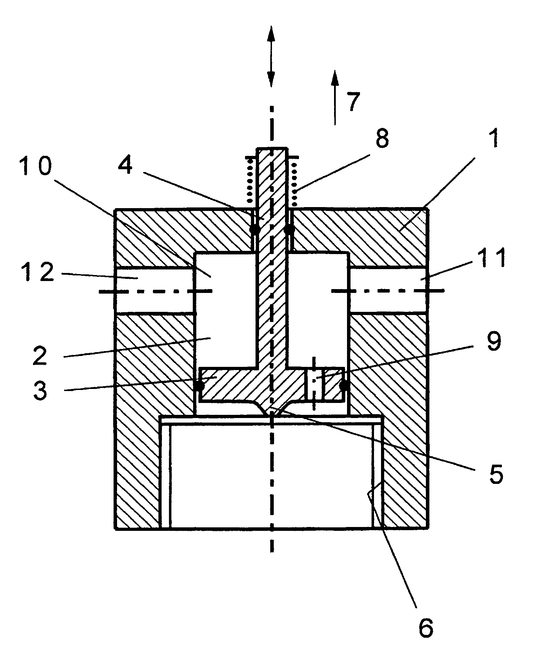

Die Erfindung wird nachfolgend anhand eines in der Zeichnung schematisch dargestellten Ausführungsbeispieles näher erläutert.

In der Zeichnung ist mit 1 eine Schraubkappe bezeichnet, in welcher ein Zylinderraum 2 ausgebildet ist. Im Zylinderraum ist eine Stösselplatte 3 dichtend geführt, welche mit einem Stössel 4 starr verbunden ist. Das untere über die Stösselplatte vorragende Ende 5 des Stössels 4 kann hiebei über einen Freiweg abwärts bewegt werden, wodurch ein Entnahmeventil einer Druckkartusche bzw. Druckflasche geöffnet werden kann, welche in das Schraubgewinde 6 der Schraubkappe eingeschraubt wird. Der zwischen dem angeschlossenen Entnahmeventil und der Stösselplatte aufgebaute Druck bewirkt eine Kraft in Richtung des Pfeiles 7 und damit entgegen der Betätigungsrichtung des Stössels zum Öffnen des Entnahmeventiles, wodurch das Entnahmeventil wiederum selbsttätig geschlossen wird und nicht durch manuelle Kraft auf den Stössel 4 wieder geöffnet werden kann. Der Stössel 4 kann hiebei entgegen der Kraft einer Feder 8 verschiebbar angeordnet sein.

Die Stösselplatte 3 weist eine Drosselbohrung 9 auf, über welche Medium in den in Strömungsrichtung dahinterliegenden Raum 10 abfließen kann und über den Anschluß 11 an eine Spülleitung abgeführt werden kann. Am Anschluß 12 kann ein nicht dargestelltes Sicherheitsventil festgelegt werden.

## Patentansprüche

1. Einrichtung zur kontrollierten Entnahme von Gasen aus Druckflaschen oder Druckkartuschen mit den gewünschten Entnahmedruck übersteigendem Druck mit einem handbetätigten Ventil, beispielsweise zum Spülen des Gasraumes von teilentleerten Weinflaschen mit Inertgasen, wobei das handbetätigte Ventil mit einem gegen die Kraft einer Feder verschiebbaren Stössel (4) ausgebildet ist, **dadurch gekennzeichnet, daß** der Stössel (4) eine in einem Zylinder (2), vorzugsweise dichtend, geführte Stösselplatte (3) trägt und die Stösselplatte (3) in Abstand von dem dem Betätigungsglied abgewandten Ende des Stössels (4) am Stössel festgelegt ist, daß der Stössel (4) und die Stösselplatte (3) über einen definierten Weg zur Öffnung des Entnahmeventiles der Druckflasche bzw. der Druckkartusche verschiebbar sind und die Stösselplatte (3) eine Querschnittsfläche aufweist, welche bei Beaufschlagung mit dem Druck der Druckflasche bzw. der Druckkartusche eine axiale Kraft auf den Stössel (4) ausübt, welche größer ist als die durch Handbetätigung auf den Stössel (4) ausübbare Kraft, daß die Stösselplatte (3) wenigstens eine Drosselöffnung bzw. Durchbrechung (9) aufweist und daß die Spülleitung auf der dem Entnahmeventil der Druckflasche oder Druckkartusche abgewandten Seite des Zylinders (2) angeschlossen ist.

2. Einrichtung nach Anspruch 1, **dadurch gekennzeichnet, daß** der Zylinder (2) in einer auf die Druckflasche bzw. die Druckkartusche aufschraubbaren Schraubkappe (1) angeordnet ist.

3. Einrichtung nach Anspruch 1 oder 2, **dadurch gekennzeichnet, daß** der Stössel (4) und die Stösselplatte (3) in dem als Schraubkappe (1) ausgebildeten Bauteil geführt sind.

4. Einrichtung nach Anspruch 1, 2 oder 3, **dadurch gekennzeichnet, daß** an den Zylinderraum (2) der Schraubkappe (1) die Spülleitung (11) und ein Sicherheitsventil (12) angeschlossen sind.

5. Einrichtung nach einer der Ansprüche 1 bis 4, **dadurch gekennzeichnet, daß** die Stösselplatte (3) an der dem Betätigungsglied abgewandten Seite wenigstens eine zur Achse des Stössels (4) konzentrische Ringnut aufweist.

## Claims

1. A device for the controlled discharge of gases by the aid of a manually actuated valve from pressure bottles or pressure cartridges having a pressure exceeding the desired discharge pressure, for instance for the sweeping of the gas space of partially emptied wine bottles with inert gases, wherein the manually actuated valve is formed with a plunger (4) capable of being displaced against the force of a spring, **characterized in that** the plunger (4) carries a plunger plate (3) guided, preferably sealingly, in a cylinder (2) and the plunger plate (3) is fixed to the plunger (4) in a spaced-apart relationship from the plunger end facing away from the actuating member, that the plunger (4) and the plunger plate (3) are displaceable over a defined path to open the discharge valve of the pressure bottle or pressure cartridge and the plunger plate (3) has a cross-sectional area which, upon actuation by the pressure from the pressure bottle or pressure cartridge, exerts an axial force on the plunger (4), which axial force is larger than the force exertable on the plunger (4) by manual actuation, that the plunger plate (3) comprises at least one throttle opening or passage opening (9), and that the sweeping line is connected on the cylinder side facing away from the discharge valve of the pressure bottle or pressure cartridge.

2. A device according to claim 1, **characterized in that** the cylinder (2) is arranged within a screw cap (1) capable of being screwed on the pressure bottle or pressure cartridge.

3. A device according to claim 1 or 2, **characterized in that** the plunger (4) and the plunger plate (3) are guided in the structural component configured as a screw cap (1).

4. A device according to claim 1, 2 or 3, **characterized in that** the sweeping line (11) and a safety valve (12) are connected to the cylinder space (2) of the screw cap (1).

5. A device according to any one of claims 1 to 4, **characterized in that** the plunger plate (3), on its side facing away from the actuating member, comprises at least one annular groove concentric with the axis of the plunger (4).

## Revendications

1. Dispositif pour prélever de manière contrôlée des gaz dans des bouteilles sous pression ou des cartouches sous pression avec une pression supérieure à la pression de prélèvement souhaitée, comportant une soupape actionnée manuellement, par exemple pour laver le volume de gaz de bouteilles de vin partiellement vidées, au moyen de gaz inertes, dans lequel la soupape actionnée manuellement comporte un poussoir (4) pouvant coulisser à l'encontre de la force d'un ressort, **caractérisé en ce que** le poussoir (4) porte une plaque de poussoir (3) guidée, de préférence de manière étanche, dans un cylindre (2), et la plaque de poussoir (3) est fixée au poussoir à distance de l'extrémité du poussoir (4) tournée à l'opposé de l'organe d'actionnement, **en ce que** le poussoir (4) et la plaque de poussoir (3) peuvent coulisser sur une distance définie pour l'ouverture de la soupape de prélèvement de la bouteille sous pression ou de la cartouche sous pression, et la plaque de poussoir (3) présente une surface de section qui, lorsqu'elle est soumise à la pression de la bouteille sous pression ou de la cartouche sous pression, exerce une force axiale sur le poussoir (4) qui est supérieure à la force qui peut être exercée par actionnement manuel sur le poussoir (4), **en ce que** la plaque de poussoir (3) présente au moins une ouverture d'étranglement ou ajour (9) et **en ce que** la conduite de lavage est raccordée, sur le côté du cylindre (2) opposé à la soupape de prélèvement de la bouteille sous pression ou cartouche sous pression.

2. Dispositif selon la revendication 1, **caractérisé en ce que** le cylindre (2) est disposé dans un capuchon à vis (1) qui peut être vissé sur la bouteille sous pression ou la cartouche sous pression.

3. Dispositif selon la revendication 1 ou 2, **caractérisé en ce que** le poussoir (4) et la plaque de poussoir (3) sont guidés dans le composant réalisé en tant que capuchon à vis (1).

4. Dispositif selon la revendication 1, 2 ou 3, **caractérisé en ce qu'**à la chambre cylindrique (2) du capuchon à vis (1) sont raccordées la conduite de lavage (11) et une soupape de sécurité (12).

5. Dispositif selon l'une des revendications 1 à 4, **caractérisé en ce que** la plaque de poussoir (3) présente, sur le côté tourné à l'opposé de l'organe d'actionnement, au moins une rainure annulaire concentrique à l'axe du poussoir (4).
